# EUROPEAN PATENT APPLICATION

(11) **EP 4 834 095 A1**
(43) Date of publication of application: **04.11.2026**
(21) Application number: 24912000.7
(22) Date of filing: 30.10.2024
(51) Int. Cl.: A01G 17/00, A01D 46/28, A01M 7/00, H02S 20/30

(54) **AGRICULTURAL WORK SYSTEM**

(30) Priority: 27.12.2023 JP 2023220750
(71) Applicant: KUBOTA CORPORATION, Osaka-shi, Osaka 530-0011 (JP)
(72) Inventor: YAMAMOTO MURAKAMI, Edwardo Arata, Sakai-shi, Osaka 590-0908 (JP); NAKANISHI, Ryutaro, Sakai-shi, Osaka 590-0908 (JP); TANAKA, Satoshi, Sakai-shi, Osaka 590-0908 (JP); NISHIKORI, Hiroki, Sakai-shi, Osaka 590-0908 (JP)
(74) Representative: Cabinet Beau de Loménie
(86) International application number: PCT/JP2024/038682
(87) International publication number: WO 2025/142107

(57) **Abstract**

An agricultural work system 1 according to the present disclosure includes a solar power generation mechanism 100 including a solar power generation panel 2 disposed above a field F, a rail 8 provided between the solar power generation panel 2 and the ground, an agricultural work device 22, and a movement mechanism 24 that moves the agricultural work device 22 along the rail 8.

## Description

### TECHNICAL FIELD

The present disclosure relates to an agricultural work system.

The present application claims priority based on Japanese Patent Application No. 2023-220750 filed on December 27, 2023, the entire contents of which are incorporated herein by reference.

### BACKGROUND ART

Patent Literature 1 discloses a solar power generation facility including solar power generation panels and a support structure that supports the solar power generation panels above a field.

### CITATION LIST

### [PATENT LITERATURE]

PATENT LITERATURE 1: Japanese Laid-Open Patent Publication No. 2014-236200

### SUMMARY OF THE INVENTION

An agricultural work system according to the present disclosure includes a solar power generation mechanism including a solar power generation panel disposed above a field, a rail provided between the solar power generation panel and ground, an agricultural work device, and a movement mechanism that moves the agricultural work device along the rail.

### BRIEF DESCRIPTION OF DRAWINGS

[FIG. 1] FIG. 1 is a view illustrating an example of an overall configuration of an agricultural work system according to an embodiment.
[FIG. 2] FIG. 2 is a view illustrating a rail unit.
[FIG. 3] FIG. 3 is a view illustrating a part of a support structure including a work unit, and a solar power generation mechanism.
[FIG. 4] FIG. 4 is a view illustrating another example of an end effector.
[FIG. 5] FIG. 5 is a view illustrating a movement mechanism.
[FIG. 6] FIG. 6 is a view for describing movement of a movement mechanism when the movement mechanism passes through a connecting portion between a first rail and a second rail.
[FIG. 7] FIG. 7 is a block diagram illustrating an example of functional configurations of a control device and a work unit.
[FIG. 8] FIG. 8 is a functional block diagram illustrating an example of quality control processing performed by the control device.

### DETAILED DESCRIPTION

### [Problems to be Solved by Present Disclosure]

The solar power generation facility can perform solar power generation while performing agriculture, and can effectively use the field.

On the other hand, further improvement in efficiency is also desired in management work and agricultural work in the field. Among them, the present inventor has found a new measure capable of improving the efficiency of management work and agricultural work of the field while effectively utilizing the field by installing solar power generation panels.

### [Effects of Present Disclosure]

According to the present disclosure, it is possible to improve efficiency of management work of a field and agricultural work.

First, contents of the embodiments will be listed and described.

### [Outline of Embodiments]

(1) An agricultural work system according to the present disclosure includes a solar power generation mechanism including a solar power generation panel disposed above a field, a rail provided between the solar power generation panel and ground, an agricultural work device, and a movement mechanism that moves the agricultural work device along the rail.

According to the above configuration, it is possible to easily install the agricultural work device capable of moving across the entire field by providing the rail on the support structure supporting the solar power generation mechanism or using the support structure supporting the solar power generation mechanism as the rail.

As a result, it is possible to improve efficiency of management work of the field and agricultural work.

(2) In the agricultural work system of (1), the agricultural work device may include an arm having an upper end fixed to the movement mechanism, and an end effector detachably provided at a lower end of the arm.

In this case, a plurality of end effectors capable of executing different types of work can be used while replacing the end effectors, and the agricultural work device can be caused to execute a plurality of types of work.

(3) In the agricultural work system of (2), the solar power generation mechanism may further include an adjustment mechanism that adjusts a solar radiation amount of the field.

In this case, the solar radiation amount of the field can be adjusted.

(4) In the agricultural work system of (3), the adjustment mechanism may include an elevation angle variable mechanism that supports the solar power generation panel such that an elevation angle of the solar power generation panel is changeable.

In this case, by changing the elevation angle of the solar power generation panel, the wind volume of the field can be adjusted in addition to the solar radiation amount of the field.

(5) In a case where the agricultural work system of (4) further includes an environment detection unit that detects an environment of the field, the elevation angle variable mechanism may be configured to be capable of controlling the elevation angle based on the environment of the field.

In this case, according to the environment of the field, the elevation angle of the solar power generation panel can be controlled such that the solar radiation amount and the wind volume are appropriate for the crops in the field.

(6) Further, in a case where the agricultural work system of (4) described above further includes a state detection unit that detects a state of a crop in the field, the elevation angle variable mechanism may be configured to be capable of controlling the elevation angle based on the state of the crop.

In this case, it is possible to control the elevation angle of the solar power generation panel such that the solar radiation amount and the wind volume are appropriate for the crops in the field.

(7) In the agricultural work system of (4), in a case where the end effector includes a state detection unit that detects a state of a crop in the field, it is preferable that the elevation angle variable mechanism is capable of adjusting the elevation angle based on a state of the crop.

Also in this case, it is possible to control the elevation angle of the solar power generation panel so that the solar radiation amount and the wind volume are appropriate for the crops in the field.

(8) In the agricultural work system of (5), in a case where the arm includes a manipulator capable of changing a position of the end effector within a predetermined range around the movement mechanism, it is preferable that the movement mechanism and the manipulator are configured to be operationally controllable based on an environment of the field.

In this case, the movement mechanism and the manipulator can execute a work operation according to the environment of the field.

(9) In the agricultural work system of (6), in a case where the arm includes a manipulator capable of changing a position of the end effector within a predetermined range around the movement mechanism, it is preferable that the movement mechanism and the manipulator are configured to be capable of controlling operations based on a state of the crop.

In this case, the movement mechanism and the manipulator can execute a work operation according to the state of the crop.

(10) In addition, in a case where the agricultural work system of (2) further includes an environment detection unit that detects an environment of the field, it is preferable that the arm includes a manipulator capable of changing a position of the end effector within a predetermined range around the movement mechanism, and the movement mechanism and the manipulator are configured to be operationally controllable based on an environment of the field.

In this case, the movement mechanism and the manipulator can execute a work operation according to the environment of the field.

(11) In a case where the agricultural work system of (2) further includes a state detection unit that detects a state of a crop in the field, it is preferable that the arm includes a manipulator capable of changing a position of the end effector within a predetermined range around the movement mechanism, and the movement mechanism and the manipulator are configured to be operationally controllable based on a state of the crop.

In this case, the movement mechanism and the manipulator can execute a work operation according to the state of the crop.

(12) In the agricultural work system of (2), the work executable by the end effector may include any of harvesting a crop, pruning the crop, water spraying, fertilization of the crop, agrochemical spraying, detecting a state of the crop, imaging the crop, pest control, and charging of equipment in the field.

In this case, the agricultural work device can execute a plurality of types of agricultural work according to the end effector.

(13) In a case where the agricultural work system of (2) further includes another agricultural work device, and another movement mechanism that moves the another agricultural work device along the rail, it is preferable that the another agricultural work device includes another end effector capable of executing an agricultural work different from the agricultural work executable by the end effector.

In this case, a plurality of agricultural work devices can cooperate to perform agricultural work.

(14) The agricultural work system according to any one of (1) to (13) may further include a power supply device that supplies power generated by the solar power generation panel to the agricultural work device or the movement mechanism.

In this case, the power from the solar power generation panel can be effectively used.

(15) It is preferable that the agricultural work system according to any one of (1) to (14) further includes a position detection mechanism that detects a position of the agricultural work device.

(16) In the agricultural work system according to any one of (6), (7), and (11), the state detection unit may include at least one of a sugar content sensor, an acidity sensor, or an imaging device.

(17) In the agricultural work system according to any one of (1) to (16), the rail may be a part of a support structure that supports the solar power generation panel.

In this case, the movement mechanism and the agricultural work device can be installed without separately installing a dedicated rail other than the support structure.

(18) The agricultural work system according to any one of (1) to (16) may further include a support structure that supports the solar power generation panel, in which the rail may be supported by the support structure.

In this case, the rail can be installed without separately providing a pillar for supporting the rail other than the support structure.

### [Details of Embodiment]

Hereinafter, a preferred embodiment will be described with reference to the drawings.

Note that at least some of the embodiments described below may be arbitrarily combined.

### [Overall Configuration of Agricultural Work System]

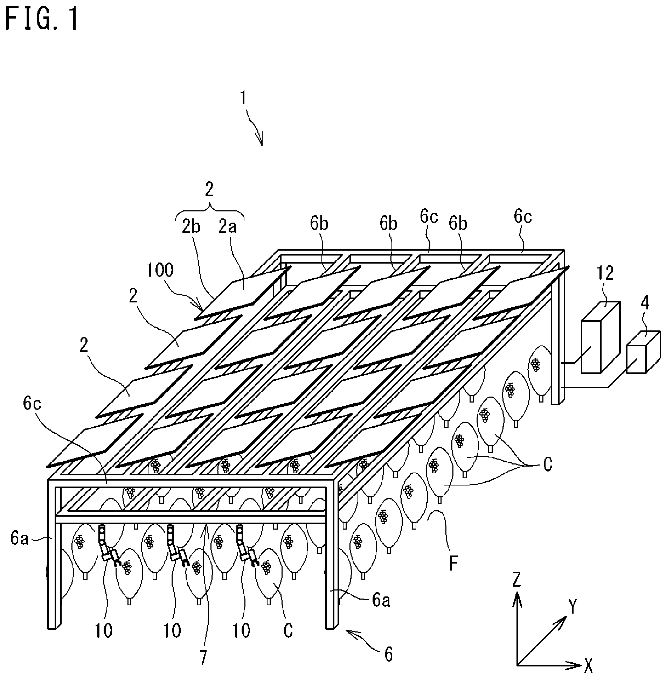

FIG. 1 is a diagram illustrating an example of an overall configuration of an agricultural work system according to an embodiment.

In FIG. 1, an agricultural work system 1 includes a solar power generation mechanism 100 installed above a field F. The agricultural work system 1 can perform solar power generation while cultivating a crop in the field F by the solar power generation mechanism 100.

The crop C cultivated in the field F is, for example, grapes.

Further, the agricultural work system 1 has a function of controlling (managing) the state of the crop C in the field F and a function of supporting the farmwork in the field F.

Note that, in the following description, three directions orthogonal to each other in each drawing are an X direction, a Y direction, and a Z direction. The Z direction is a vertical direction.

The agricultural work system 1 includes a control device 4, a support structure 6, a rail unit 7, and a plurality of work units 10 in addition to the solar power generation mechanism 100.

The solar power generation mechanism 100 includes a plurality of solar power generation panels 2 and a plurality of elevation angle variable mechanisms. Each of the plurality of solar power generation panels 2 includes a plurality of cells 2a and a panel frame 2b. The plurality of cells 2a is arranged on the panel frame 2b. The panel frame 2b holds the plurality of cells 2a in a panel shape.

The voltage of the power output from the plurality of solar power generation panels 2 is adjusted via a DC/DC converter or the like and supplied to a power conditioner (PCS) 12. The PCS 12 converts the power from the plurality of solar power generation panels 2 into an alternating current, and supplies the power to a load connected to the PCS 12. In addition, the PCS 12 is connected to a commercial AC power supply system, and may supply power from the plurality of solar power generation panels 2 to the system.

Further, each unit of the present system 1 is connected to the PCS 12 as a load. Therefore, the power of the plurality of solar power generation panels 2 is supplied to each unit of the present system 1.

That is, the PCS 12 functions as a power supply device that supplies the power generated by the solar power generation panels 2 to the work units 10 (the agricultural work device or the movement mechanism).

In this case, the power from the solar power generation panel 2 can be effectively used.

Note that the agricultural work system 1 may include a storage battery for storing the output of the DC/DC converter. The DC power stored in the storage battery is used as power output at a charging station to be described later or DC power required in the present system 1.

The support structure 6 supports the plurality of solar power generation panels 2. The support structure 6 includes a plurality of pillars 6a, a plurality of beam frames 6b, and a plurality of support frames 6c. The plurality of pillars 6a, the plurality of beam frames 6b, and the plurality of support frames 6c are rod-shaped members made of a steel material, an aluminum alloy material, or the like.

The plurality of (four in the illustrated example) pillars 6a is erected in the Z direction at the edge of the field F. Note that, in FIG. 1, the pillars 6a are provided at four corners of the field F.

The plurality of (five in the illustrated example) beam frames 6b is provided above the field F. The plurality of beam frames 6b extends in the Y direction. The plurality of beam frames 6b is arranged side by side in the X direction at regular intervals.

The plurality of elevation angle variable mechanisms described above is provided above the plurality of beam frames 6b, respectively. The plurality of elevation angle variable mechanisms support the solar power generation panels 2 on the beam frames 6b such that the elevation angles of the solar power generation panels 2 are changeable.

The plurality of (two in the illustrated example) support frames 6c extends in the X direction. The plurality of support frames 6c connects the distal ends of the plurality of beam frames 6b and the distal ends of the pillars 6a. Thereby, the plurality of beam frames 6b and the plurality of solar power generation panels 2 are supported above the field F.

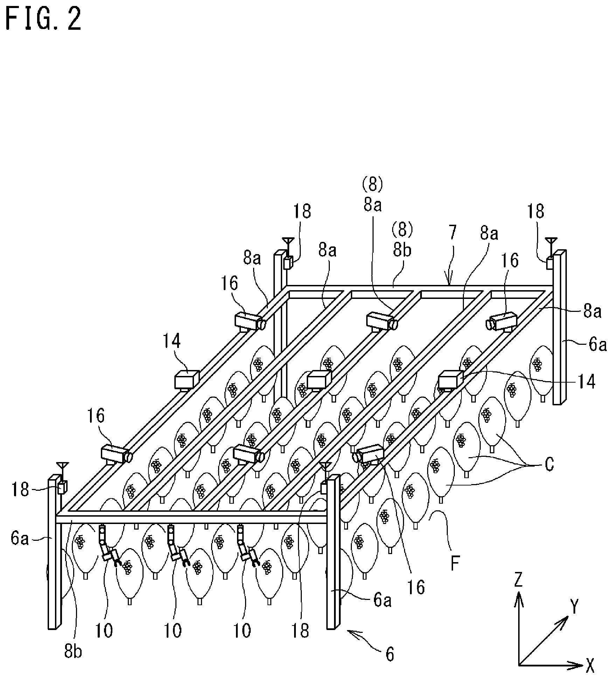

FIG. 2 is a diagram illustrating the rail unit 7. FIG. 2 illustrates the support structure 6 in a state in which the solar power generation mechanism 100, the beam frames 6b of the support structure 6, and the support frame 6c are removed.

The rail unit 7 constitutes a track on which the plurality of work units 10 travels. The rail unit 7 is provided between the plurality of solar power generation panels 2 and the ground of the field F.

The rail unit 7 includes a plurality of rails 8. The plurality of rails 8 is, for example, rod-shaped members made of C-shaped steel. The plurality of rails 8 includes a plurality of first rails 8a and a plurality of second rails 8b.

The plurality of (five in the illustrated example) first rails 8a extends in the Y direction. The plurality of first rails 8a is arranged side by side in the X direction at regular intervals.

The plurality of (two in the illustrated example) second rails 8b extends in the X direction. The plurality of second rails 8b connects the distal ends of the plurality of first rails 8a to each other. Thus, the rail unit 7 is configured in a lattice shape. In other words, the rail unit 7 is a rail network in which the rails 8 are combined.

The rail unit 7 is provided with a plurality of environment detection units 14. The plurality of environment detection units 14 is provided at predetermined intervals over the entire field F. The plurality of environment detection units 14 includes, for example, a temperature and humidity sensor and a wind volume sensor. The environment detection unit 14 detects temperature, humidity, and wind volume as the environment of the field F. The environment detection unit 14 is communicably connected to the control device 4. The output of the environment detection unit 14 is given to the control device 4.

Further, the rail unit 7 is provided with a plurality of cameras 16. The plurality of cameras 16 is provided at predetermined intervals over the entire field F. The plurality of cameras 16 images the crop C in the field F. The plurality of cameras 16 is communicably connected to the control device 4. The image data output from the plurality of cameras 16 is provided to the control device 4.

Further, the support structure 6 is provided with a plurality of wireless communication devices 18. The plurality of wireless communication devices 18 is provided at predetermined intervals over the entire field F. The plurality of wireless communication devices 18 has a function of performing wireless communication with the work units 10. The plurality of wireless communication devices 18 is connected to the control device 4. The control device 4 can communicate with the work units 10 via a plurality of wireless communication devices 18.

The plurality of wireless communication devices 18 and the work units 10 communicate with each other by, for example, a wireless LAN. That is, the plurality of wireless communication devices 18 serves as access points. In the following description, the plurality of wireless communication devices 18 may be referred to as access points 18.

Note that FIG. 2 illustrates a case where the access points 18 are provided on the four pillars 6a, respectively. The access points 18 may be provided on the support structure 6 or may be provided on the rail unit 7.

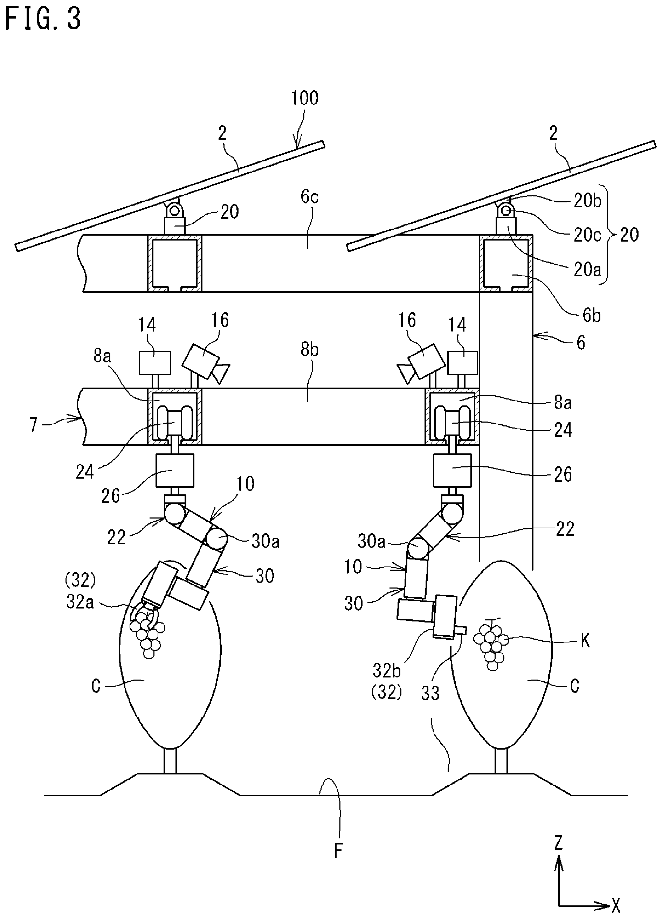

FIG. 3 is a view illustrating a part of a support structure 6 including the work units 10, and a solar power generation mechanism 100.

As described above, the solar power generation panels 2 and elevation angle variable mechanisms 20 are provided on the beam frames 6b of the support structure 6. Each elevation angle variable mechanism 20 includes a base 20a, a support portion 20b, and an actuator 20c. The base 20a is provided on the upper surface of the beam frame 6b. The support portion 20b is pivotally provided on the base 20a. The support portion 20b rotates about an axis in the Y direction. The support portion 20b is fixed to the lower surface of the solar power generation panel 2. Thus, the solar power generation panel 2 is rotatable with respect to the base 20a together with the support portion 20b. Thereby, the elevation angle variable mechanism 20 supports the solar power generation panel 2 such that the elevation angle of the solar power generation panel 2 is changeable. The actuator 20c drives the rotation of the support portion 20b. That is, the elevation angle of the solar power generation panel 2 can be changed by controlling the actuator 20c.

The actuator 20c is controlled by the control device 4.

In the present embodiment, the solar radiation amount of the field F and the wind volume of the field F can be adjusted by changing the elevation angle of the solar power generation panel 2 by the elevation angle variable mechanism 20.

That is, the elevation angle variable mechanism 20 constitutes an adjustment mechanism that adjusts the solar radiation amount of the field F.

The plurality of work units 10 is suspended from the rail unit 7. The plurality of work units 10 moves along the rails 8 of the rail unit 7, and has a function of executing farmwork on the crops C of the field F and a function of detecting the state of the crops C.

### [Work unit 10]

In FIG. 3, each of the plurality of work units 10 includes an agricultural work device 22, a movement mechanism 24, and a control box 26.

The agricultural work device 22 has a function of executing agricultural work performed on the crop C and a function as a sensor that detects a state of the crop C.

The movement mechanism 24 has a function of moving the agricultural work device 22 along the rails 8a and 8b.

The agricultural work device 22 includes an arm 30 and an end effector 32.

An upper end of the arm 30 is fixed to the movement mechanism 24. The arm 30 extends downward from the movement mechanism 24. The end effector 32 is provided at the lower end of the arm 30.

The arm 30 is a manipulator capable of changing the position of the end effector 32 within a predetermined range around the movement mechanism 24. The arm 30 is an articulated manipulator including a plurality of joints 30a.

The end effector 32 is a device capable of performing a work operation such as farmwork on the crop C. The end effector 32 is disposed at the work position by the arm 30. The end effector 32 performs a work operation at the work position.

The end effector 32 is detachably attached to the arm 30.

In the present embodiment, a plurality of types of the end effector 32 is prepared for each work operation. Therefore, the agricultural work device 22 can perform a plurality of types of work operations by replacing the end effector 32.

The work executable by the end effector 32 includes harvesting the crop C, pruning the crop C, water spraying, fertilization of the crop C, agrochemical spraying, detecting a state of the crop C, imaging the crop C, pest control, and charging of equipment in the field F.

Thus, the end effector 32 includes the end effector 32 for harvesting work, the end effector 32 for pruning, the end effector 32 for water spraying, the end effector 32 for fertilization, the end effector 32 for agrochemical spraying, the end effector 32 for detecting the state of the crop C, the end effector 32 for imaging, the end effector 32 for pest control, and the end effector 32 for charging of equipment in the field F.

Note that the equipment in the field F targeted by the end effector 32 for charging include agricultural work vehicles such as an electric tractor and an electric rover in addition to the other work units 10.

In FIG. 3, the end effector 32a is for harvesting. The end effector 32a for harvesting can grip the fruit K of the crop C and execute harvesting work of the fruit K.

In FIG. 3, the end effector 32b is for detecting the state of the crop C. The end effector 32b for state detection has a sensor 33 at the distal end. The sensor 33 includes a sensor that detects the sugar content and acidity of the crop C (fruit K) and a sensor that detects the moisture content of the crop C. That is, the state of the crop C includes sugar content, acidity, and moisture content. The arm 30 brings the sensor 33 of the end effector 32b for state detection close to the crop C. The sensor 33 can detect the state of the crop C at a position close to the detection target.

Further, the sensor 33 also includes a camera that images the crop C (fruit K).

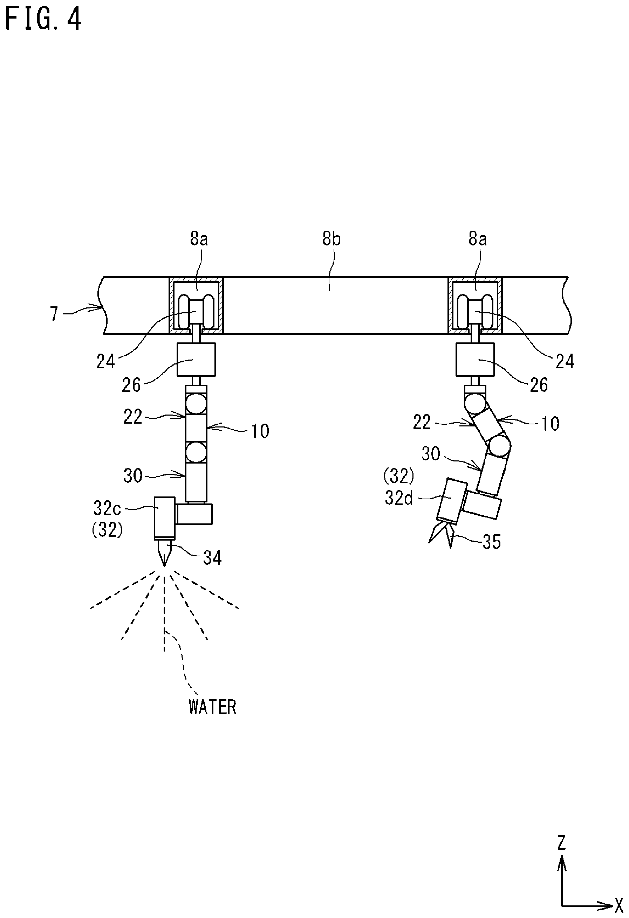

FIG. 4 is a view illustrating another example of the end effector 32.

In FIG. 4, the end effector 32c is for water spraying. The end effector 32c for water spraying includes a water spray nozzle 34. The end effector 32c for water spraying supplies water to the crops C by spraying water from the water spray nozzle 34. Thus, irrigation for the crop C is performed.

In addition, the end effector 32c for water spraying is used as the end effector 32 for fertilization if it is used for supplying fertilizer. In addition, the end effector 32c for water spraying is used as the end effector 32 for agrochemical spraying if it is used for supplying agrochemicals.

In FIG. 4, the end effector 32d is for pruning. The end effector 32d for pruning includes pruning scissors 35. The end effector 32d for pruning can perform pruning of the crop C by using the pruning scissors 35.

The plurality of types of end effectors 32 is stocked in, for example, a stocker (not illustrated). The stocker is installed at a position where the work unit 10 can move. When replacing the end effector 32, the work unit 10 moves to the position of the stocker. The agricultural work device 22 can replace the end effector 32 at the position of the stocker. The end effector 32 corresponding to the work to be executed is attached to the agricultural work device 22.

As described above, since the agricultural work device 22 of the present embodiment includes the arm 30 fixed to the movement mechanism 24 and the end effector 32 detachably provided at the lower end of the arm 30, a plurality of end effectors 32 capable of executing different types of work can be used while replacing the end effectors, and the agricultural work device 22 can be caused to execute a plurality of types of work.

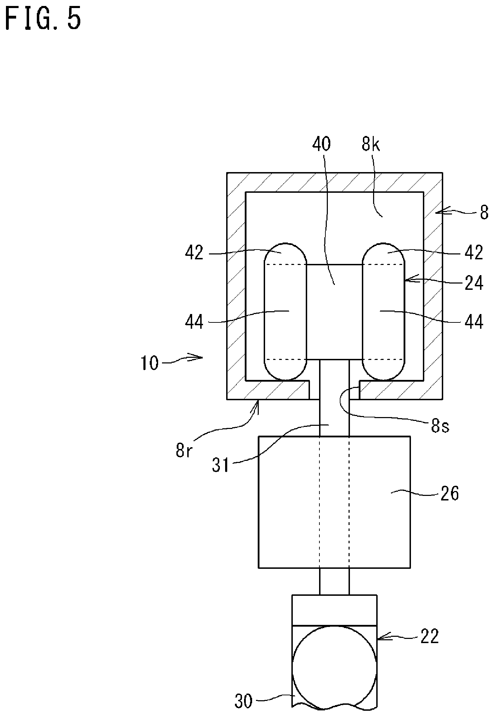

FIG. 5 is a diagram illustrating the movement mechanism 24. FIG. 5 illustrates the movement mechanism 24 when one of the rails 8 is viewed from the direction in a longitudinal direction. Thus, the rail 8 is illustrated in a cross-sectional view along a plane orthogonal to the longitudinal direction of the rail 8.

As described above, the rail 8 is C-shaped steel. Therefore, a bottom plate 8r of the rail 8 has a slit 8s in the longitudinal direction. The bottom plate 8r of the rail 8 is a member constituting the lower surface of the rail 8. The slit 8s communicates the inside and the outside of the rail 8. The slit 8s opens downward.

The movement mechanism 24 travels in an internal space 8k of the rail 8.

The movement mechanism 24 includes a main body 40, a pair of wheels 42, and a pair of motors 44.

The pair of motors 44 is provided at both ends of the main body 40. Rotating shafts of the pair of motors 44 are provided concentrically with each other. Each of the pair of motors 44 is a so-called in-wheel motor. Therefore, the pair of wheels 42 is integrally provided on the outer peripheral surfaces of rotors (not illustrated) of the pair of motors 44. The pair of motors 44 rotatably drives the pair of wheels 42 while constituting an axle of the pair of wheels 42.

The main body 40 is interposed between the pair of motors 44 and integrally connects the pair of motors 44. A coupling shaft 31 is fixed to the main body 40. The coupling shaft 31 is a member that couples the movement mechanism 24 and the arm 30. The coupling shaft 31 extends downward from the main body 40, passes through the slit 8s, and protrudes from the bottom plate 8r of the rail 8. The lower end of the coupling shaft 31 is connected to the arm 30. Thus, the coupling shaft 31 couples the movement mechanism 24 and the arm 30 (agricultural work device 22).

Note that the pair of motors 44 is controlled independently of each other. Therefore, the pair of motors 44 may rotate in the same direction or rotate in opposite directions.

Since the bottom plate 8r of the rail 8 has the slit 8s, the coupling shaft 31 protrudes from the bottom plate 8r of the rail 8. Further, the pair of wheels 42 is in contact with the bottom plate 8r. Thus, the work unit 10 is suspended on the rail 8. When the pair of wheels 42 are rotationally driven by the pair of motors 44, the work unit 10 travels on the bottom plate 8r. Thus, the work unit 10 can move along the rail 8 of the rail unit 7.

The work unit 10 can move along the first rail 8a and the second rail 8b included in the rail 8. Therefore, the work unit 10 can move over the entire region of the rail unit 7.

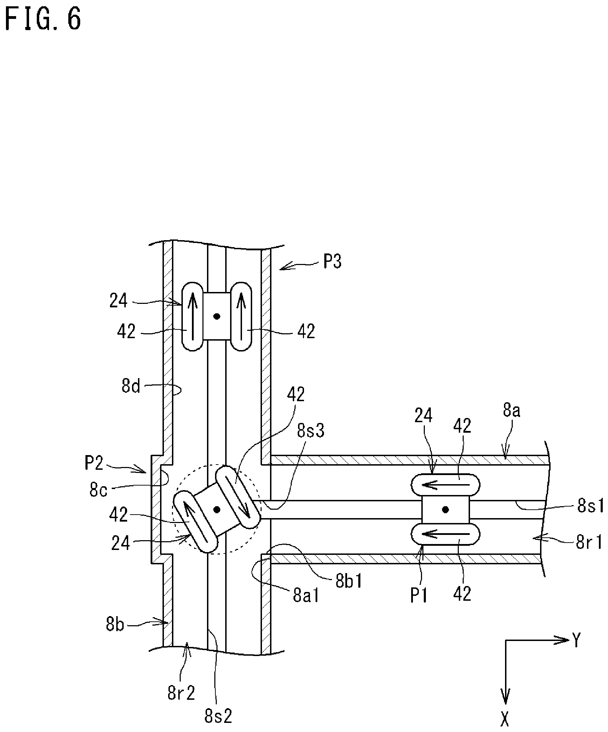

FIG. 6 is a diagram for describing the movement of the movement mechanism 24 when passing through the connecting portion between the first rail 8a and the second rail 8b. FIG. 6 illustrates the movement mechanism 24 when the rail 8 is viewed from above. Thus, the rail 8 is illustrated as a cross-sectional view along the X-Y plane.

FIG. 6 illustrates a state where the movement mechanism 24 moves from a position P1 to a position P3 via the position P2. The position P1 is a position on the first rail 8a. At the position P1, the movement mechanism 24 travels on the first rail 8a toward the second rail 8b. Therefore, at this time, the pair of motors 44 of the movement mechanism 24 rotate in the same direction.

An end 8a1 of the first rail 8a is connected to an opening 8b1 of the second rail 8b. The opening 8b1 is provided corresponding to the end 8a1. A bottom plate 8r1 of the first rail 8a and a bottom plate 8r2 of the second rail 8b are connected at the opening 8b1.

Therefore, the movement mechanism 24 traveling on the first rail 8a can enter the internal space of the second rail 8b through the opening 8b1.

The bottom plate 8r2 of the second rail 8b is provided with a connecting slit 8s3 in addition to a slit 8s2. The connecting slit 8s3 is connected to a slit 8a2 of the second rail 8b at a right angle. The connecting slit 8s3 connects the slit 8a2 of the second rail 8b and a slit 8s1 of the first rail 8a.

When entering the internal space of the second rail 8b through the opening 8b1, the movement mechanism 24 travels inside the second rail 8b along the connecting slit 8s3 and reaches a point where the slit 8s2 and the connecting slit 8s3 are connected.

The position P2 is a point where the slit 8s2 and the connecting slit 8s3 are connected.

When the movement mechanism 24 reaches the position P2, the pair of motors 44 is controlled to rotate in opposite directions. Thereby, the movement mechanism 24 rotates on the spot while being located at the position P2. That is, the movement mechanism 24 changes its direction while being located at the position P2. When the rotating shafts of the pair of motors 44 become substantially parallel to the Y direction, the movement mechanism 24 ends the direction change, starts traveling along the slit 8s2 of the second rail 8b, and proceeds to the position P3.

As described above, the movement mechanism 24 passes through the connecting portion between the first rail 8a and the second rail 8b.

As described above, the movement mechanism 24 (work unit 10) can move between the first rail 8a and the second rail 8b, and can move over the entire region of the rail unit 7.

Note that, in the second rail 8b, a relief portion 8c is provided in a portion facing the opening 8b1. The relief portion 8c is a portion recessed outward with respect to the inner surface 8d of the second rail 8b. The relief portion 8c is provided to prevent the movement mechanism 24 that changes its direction at the position P2 from coming into contact with the inner surface 8d of the second rail 8b.

As illustrated in FIG. 5, the control box 26 is fixed to the coupling shaft 31. The control box 26 accommodates a control device that controls each unit of the work unit 10, a storage battery, a wireless communication device, and the like therein.

As described above, in the present embodiment, since the rail unit 7 is provided on the support structure 6 that supports the solar power generation panels 2, the agricultural work device 22 (work unit 10) that can move over the entire field F can be easily installed.

As a result, it is possible to improve the efficiency of the management work and the agricultural work of the field F.

Further, in the present embodiment, since the rail unit 7 is supported by the support structure 6, the rail unit 7 can be installed without providing pillars for instructing the rail unit 7 separately other than the support structure 6.

### [Functional Configuration of Control Device 4 and Work Units 10]

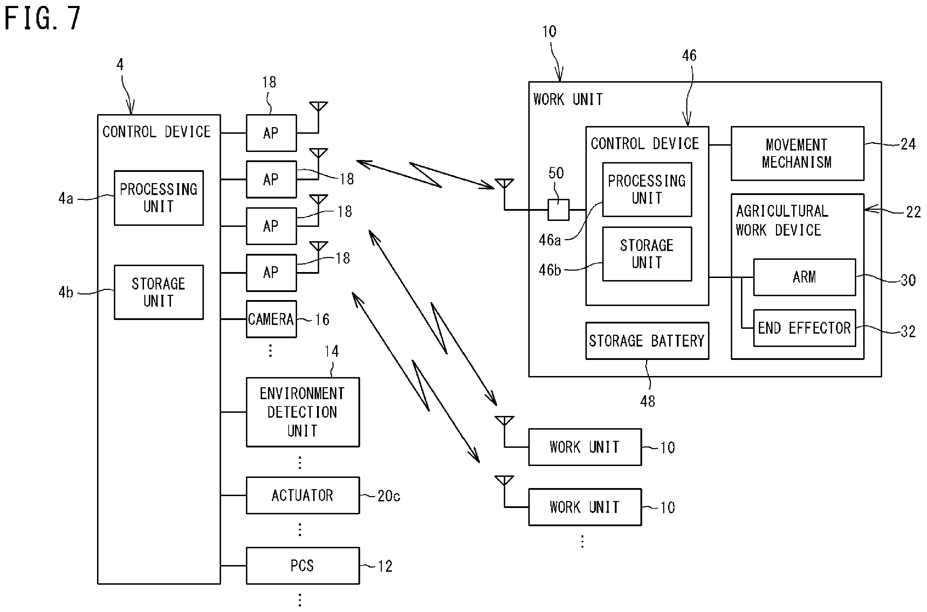

FIG. 7 is a block diagram illustrating an example of functional configurations of the control device 4 and the work units 10.

The control device 4 is a computer such as a personal computer or a server. The control device 4 may be a smartphone, a tablet, or the like, or may be a computer system on a cloud.

A plurality of access points 18, a plurality of environment detection units 14, a plurality of cameras 16, and a plurality of actuators 20c are connected to the control device 4.

The control device 4 and these devices are connected to communicate with each other in a wired or wireless manner. The control device 4 can control these devices by giving control commands. Further, the control device 4 can receive outputs given from these devices.

The control device 4 is communicably connected to various information servers via a network. The network may be a local network or a global network. Furthermore, the network may be configured by combining a local network and a global network.

The control device 4 includes a processing unit 4a and a storage unit 4b.

The processing unit 4a is, for example, one or more processors of various types adapted to control a computer, such as a central processing unit (CPU), a graphics processing unit (GPU), a digital signal processor (DSP), and a field-programmable gate array (FPGA).

The storage unit 4b is, for example, a flash memory, a hard disk, a read only memory (ROM), a random access memory (RAM), or the like.

The storage unit 4b stores a computer program to be executed by the processing unit 4a and necessary information. The processing unit 4a implements various processing functions of the processing unit 4a by executing a computer program stored in a computer-readable non-transitory recording medium such as the storage unit 4b.

The processing unit 4a has a function of controlling each unit of the agricultural work system 1 and executing processing of performing quality control of the crops C of the field F. The quality control processing will be described in detail later.

Further, the processing unit 4a has a function of executing processing of detecting the positions of the plurality of work units 10. The processing unit 4a performs wireless LAN communication with the work units 10 via the plurality of access points 18. The processing unit 4a acquires, from the plurality of access points 18, information regarding received signals when the signals from the work units 10 are received. The processing unit 4a detects the positions of the work units 10 based on the information regarding the received signals acquired from the plurality of access points 18. The information regarding the received signals includes a received signal strength indicator (RSSI) and channel state information (CSI).

The plurality of access points 18 is provided at predetermined intervals over the entire field F. That is, the positions of the plurality of access points 18 are known. Therefore, the positions of the work units 10 as signal sources can be detected by analyzing the information regarding the received signals in the plurality of access points 18. The processing unit 4a detects the position of each of the plurality of work units 10. The detected position of the work unit 10 is used for quality control processing.

In the present embodiment, since the solar power generation panels 2 are provided above the work units 10, position detection using a GPS receiver may be difficult.

On the other hand, in the present embodiment, since the position of the work unit 10 is detected using the plurality of access points 18, the position of the work unit 10 can be accurately detected even if the solar power generation panel 2 is provided above.

Note that the position of the work unit 10 may be detected by distance measurement using a laser beam or by distance measurement using a stereo camera. In the position detection by the distance measurement, the position of the work unit 10 is detected by measuring the distance between the work unit 10 and the reference position.

The work unit 10 includes a control device 46, a storage battery 48, and a wireless communication device 50 in addition to the agricultural work device 22 and the movement mechanism 24 described above.

The control device 46, the storage battery 48, and the wireless communication device 50 are accommodated in the control box 26. The control device 46 has a function of controlling the agricultural work device 22 and the movement mechanism 24.

The storage battery 48 supplies power to each unit of the work unit 10.

The wireless communication device 50 is used for wireless communication with the control device 4. The wireless communication device 50 has a function of performing wireless LAN communication with a plurality of access points 18.

The control device 46 is a computer. The agricultural work device 22, the movement mechanism 24, and the wireless communication device 50 are connected to the control device 46.

The control device 46 can control these devices by giving control commands. Further, the control device 46 can receive outputs given from these devices.

The control device 46 includes a processing unit 46a and a storage unit 46b.

The processing unit 46a is, for example, one or more processors of various types adapted to control a computer, such as a central processing unit (CPU), a graphics processing unit (GPU), a digital signal processor (DSP), and a field-programmable gate array (FPGA).

The storage unit 46b is, for example, a flash memory, a hard disk, a read only memory (ROM), a random access memory (RAM), or the like.

The storage unit 46b stores a computer program to be executed by the processing unit 46a and necessary information. The processing unit 46a implements various processing functions of the processing unit 46a by executing a computer program stored in a computer-readable non-transitory recording medium such as the storage unit 46b.

The processing unit 46a has a function of controlling the pair of motors 44 of the movement mechanism 24 to move the work unit 10 to an arbitrary position in the rail unit 7.

Further, the processing unit 46a has a function of controlling the arm 30 and the end effector 32 of the agricultural work device 22 to execute agricultural work.

The processing unit 46a moves the work unit 10 to a predetermined position in the rail unit 7 based on a command given from the control device 4, and controls the arm 30 and the end effector 32 to execute a predetermined operation.

Further, the processing unit 46a acquires the charge level of the storage battery 48, and moves the work unit 10 to the charging station when the charge level becomes smaller than a predetermined charge level.

The charging station (not illustrated) is provided within a movement range of the work unit 10. The work unit 10 located in the charging station can receive a charge of the storage battery 48. As described above, the processing unit 46a can charge the storage battery 48 by moving the work unit 10 to the charging station.

For example, the charging station is installed at the same position as the stocker. Therefore, the processing unit 46a moves the work unit 10 to the charging station when determining that the storage battery 48 needs to be charged and when determining that the end effector 32 needs to be replaced.

Note that the plurality of work units 10 may be equipped with the end effector 32 for performing the same type of work, or may be mounted with the end effector 32 for performing different types of work.

When the plurality of work units 10 is equipped with the end effector 32 for performing different types of work, the plurality of work units 10 can cooperate to perform agricultural work.

### [Quality Control Processing]

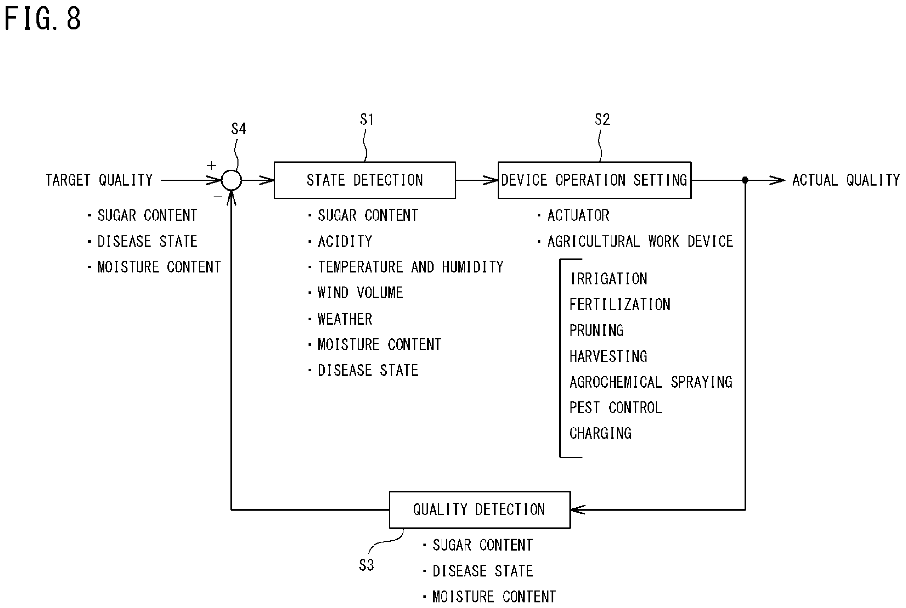

FIG. 8 is a functional block diagram illustrating an example of quality control processing performed by the control device 4.

The processing unit 4a of the control device 4 performs control to bring the quality of the crop C close to the target quality.

The quality to be controlled includes, for example, sugar content, disease state, and moisture content.

The target quality is given by an operator of the control device 4. The target quality includes a target value of each quality and a target state.

As illustrated in FIG. 8, when the target quality is given, the processing unit 4a first performs state detection (in FIG. 8, step S1). The state detection is processing of detecting the state of the crop C (fruit K) and the environment.

The state detected by the state detection is processing of detecting the sugar content and acidity of (the fruit K as) the crop C, the moisture content of the crop C, the disease state of the crop C, the temperature and humidity of the field F, the wind volume of the field F, and the weather of the field F.

The sugar content, acidity, and moisture content of the crop C are detected by the end effector 32b for state detection. Therefore, the processing unit 4a causes the arm 30 of the agricultural work device 22 to be equipped with the end effector 32b for state detection, and causes the agricultural work device 22 (work unit 10) to perform state detection.

The temperature and humidity and the wind volume of the field F are detected by the environment detection unit 14.

The weather of the field F is acquired from the outside, for example, an information server connected via a network, input by an operator of the control device 4, or the like.

The disease state of the crop C is detected by the end effector 32b for state detection and the camera 16. Therefore, the processing unit 4a causes the arm 30 of the agricultural work device 22 to be equipped with the end effector 32b for state detection. The sensor 33 of the end effector 32b in this case includes an imaging camera. The processing unit 4a causes the agricultural work device 22 (work unit 10) to image the crop C. The processing unit 4a determines whether or not the crop C is diseased based on the image data of the crop C captured by the sensor 33 or the camera 16. The processing unit 4a sets the determination result as the disease state of the crop C.

Further, the temperature and humidity of the field F and the wind volume of the field F included in the state of the field F are detected by the environment detection unit 14.

Next, the processing unit 4a performs device operation setting (in FIG. 8, step S2). The device operation setting is processing for causing each unit of the system 1 to execute agricultural work, environment setting, and the like based on each state obtained by state detection.

More specifically, the device operation setting includes setting of the actuator 20c, selection of the agricultural work to be executed by the agricultural work device 22, and execution of the selected agricultural work. The agricultural work to be selected includes irrigation, fertilization, pruning, harvesting, agrochemical spraying, pest control, and charging of equipment in the field F.

The processing unit 4a controls the actuator 20c and the work unit 10 (the agricultural work device 22 and the movement mechanism 24), and executes device operation setting.

In the device operation setting, the processing unit 4a determines a position to which the work unit 10 is to be moved based on position information of the work unit 10 (wireless communication device 50), and moves the work unit 10 (movement mechanism 24). When the work unit 10 reaches the position to be moved, the processing unit 4a controls the agricultural work device 22 and causes the agricultural work device 22 to execute work.

The processing unit 4a can adjust the elevation angle of the solar power generation panel 2 by setting and controlling the actuator 20c.

Further, the processing unit 4a selects agricultural work to be executed by the agricultural work device 22 from among irrigation, fertilization, pruning, harvesting, agrochemical spraying, pest control, and charging of equipment in the field F.

When the irrigation is selected, the processing unit 4a causes the arm 30 of the agricultural work device 22 to be equipped with the end effector 32c for water spraying, and causes the agricultural work device 22 (work unit 10) to spray water. Accordingly, irrigation of the field F is performed.

When the fertilization is selected, the processing unit 4a causes the arm 30 of the agricultural work device 22 to be equipped with the end effector 32c for water spraying, and causes the agricultural work device 22 (work unit 10) to spray liquid fertilizer. As a result, fertilization of the field F is performed.

When the pruning is selected, the processing unit 4a causes the arm 30 of the agricultural work device 22 to be equipped with the end effector 32d for pruning, and causes pruning of the crop C to be performed at a predetermined place of the field F.

When the harvesting is selected, the processing unit 4a causes the arm 30 of the agricultural work device 22 to be equipped with the end effector 32a for harvesting, and causes harvesting of the crop C (fruit K) to be performed at a predetermined place of the field F.

When the agrochemical spraying is selected, the processing unit 4a causes the arm 30 of the agricultural work device 22 to be equipped with the end effector 32c for water spraying, and causes the agricultural work device 22 (work unit 10) to spray agrochemicals. As a result, agrochemical spraying of the field F is performed.

When the pest control is selected, the processing unit 4a causes the arm 30 of the agricultural work device 22 to be equipped with the end effector 32a for harvesting or the end effector 32d for pruning, and causes pruning of a portion where insect pests are present or direct removal of insect pests adhering to the crop.

In a case where the charging of equipment in the field F is selected, the processing unit 4a causes the arm 30 of the agricultural work device 22 to be equipped with the end effector 32 for charging. At this time, the processing unit 4a causes a storage battery, which stores electric power for charging, to be mounted on the work unit 10. The work unit 10 equipped with the end effector 32 for charging charges the power stored in the storage battery to the equipment in the field F including the other work units 10.

In the device operation setting, the charging of the equipment in the field F may always be set. In this case, the work unit 10 can receive charging from another work unit 10 equipped with the end effector 32 for charging, in addition to the charging station.

After executing the device operation setting, the processing unit 4a performs quality detection (in FIG. 8, step S3). The quality detection is processing of detecting the quality to be controlled. Thus, quality detection includes detection of sugar content, detection of disease state, and detection of moisture content.

When the quality detection is completed, the processing unit 4a compares the target quality with the detected quality by the quality detection (in FIG. 8, step S4), and performs the state detection again based on the comparison result. That is, the processing unit 4a performs feedback control on the quality to be controlled. Thereafter, the processing unit 4a repeats these processes and performs control such that the actual quality approximates the target quality.

Note that the period from the device operation setting to the quality detection can be appropriately changed according to the quality to be controlled.

The processing unit 4a individually controls the quality to be controlled.

First, control of sugar content will be described.

The processing unit 4a performs state detection when the target sugar content is given as the target quality. In the state detection, the processing unit 4a detects sugar content, acidity, temperature and humidity, wind volume, weather, and moisture content.

Next, the processing unit 4a performs device operation setting based on each state. In the device operation setting, the processing unit 4a sets and controls the actuator 20c to adjust the elevation angle of the solar power generation panel 2.

As a result, the processing unit 4a can adjust the solar radiation amount reaching the ground of the field F or adjust the wind volume of the field F based on the state of the field F.

Further, the processing unit 4a selects the agricultural work to be executed by the agricultural work device 22 and causes the agricultural work device 22 to execute the selected agricultural work based on each state. Here, the processing unit 4a selects irrigation.

That is, in the device operation setting in the control of the sugar content, the processing unit 4a performs quality control by combining the adjustment of the elevation angle of the solar power generation panel 2 and the irrigation.

For example, in the coloring period of the crop C (fruit K), when the sugar content is lower than the assumed sugar content (target sugar content), the processing unit 4a can increase the solar radiation amount by adjusting the elevation angle of the solar power generation panel 2 in order to accelerate the maturation of the fruit K.

Further, in a case where it is determined that there is water stress based on the moisture content, the processing unit 4a performs moisture adjustment by irrigation.

On the other hand, when the sugar content is higher than the assumed sugar content (target sugar content), the processing unit 4a can reduce the solar radiation amount by adjusting the elevation angle of the solar power generation panel 2, and can cause spraying of water so as to lower the temperature of the field F by irrigation.

Next, the control of the disease state will be described.

When a disease state is given as the target quality, the processing unit 4a performs state detection. In the state detection, the processing unit 4a detects a disease state. As described above, the processing unit 4a sets the determination result as to whether or not the crop C is diseased as a disease state.

Next, the processing unit 4a performs device operation setting based on the disease state. In the device operation setting, the processing unit 4a sets and controls the actuator 20c to adjust the elevation angle of the solar power generation panel 2.

Further, the processing unit 4a selects the agricultural work to be executed by the agricultural work device 22 and causes the agricultural work device 22 to execute the selected agricultural work based on each state. Here, the processing unit 4a selects irrigation, pruning, agrochemical spraying, and pest control.

That is, in the device operation setting in the control of the sugar content, the processing unit 4a performs quality control by combining adjustment of the elevation angle of the solar power generation panel 2, irrigation, pruning, agrochemical spraying, and pest control.

For example, the processing unit 4a can cause pruning of the portion determined to be in the disease state or spraying agrochemicals.

Further, regardless of the disease state, in the case of rainfall, the processing unit 4a causes the solar power generation panel 2 to be horizontal to function as an umbrella for suppressing rain from hitting the crops C. This is because there is a possibility that the crop C is infected with a disease due to rain.

Further, in order to promote drying after rainfall, the elevation angle of the solar power generation panel 2 can be adjusted, or the crop C can be pinched by pruning, thereby enhancing ventilation or enhancing light exposure.

In addition to the control such as pruning, agrochemical spraying, and adjustment of the solar power generation panel 2, the processing unit 4a can also perform pest control by directly removing insect pests adhering to the crop C.

Next, the control of the moisture content will be described.

When the target moisture content is given as the target quality, the processing unit 4a performs state detection. In the state detection, the processing unit 4a detects temperature and humidity, wind volume, weather, and moisture content.

Next, the processing unit 4a performs device operation setting based on each state. In the device operation setting, the processing unit 4a sets and controls the actuator 20c to adjust the elevation angle of the solar power generation panel 2.

Further, the processing unit 4a selects the agricultural work to be executed by the agricultural work device 22 and causes the agricultural work device 22 to execute the selected agricultural work based on each state. Here, the processing unit 4a selects irrigation.

That is, in the device operation setting in the control of the moisture content, the processing unit 4a performs quality control by combining the adjustment of the elevation angle of the solar power generation panel 2 and the irrigation.

For example, in a case where the moisture content is larger than the assumed amount (target amount), the processing unit 4a can increase the solar radiation amount by adjusting the elevation angle of the solar power generation panel 2, and can increase the temperature of the field F to promote evaporation of moisture.

Conversely, in a case where the moisture content is smaller than the assumed amount (target amount), the processing unit 4a can reduce the solar radiation amount by adjusting the elevation angle of the solar power generation panel 2, increase the range of the shadow in the field F, and suppress the improvement of the moisture. Furthermore, water can be supplied to the crop C through irrigation.

As described above, the agricultural work device 22 and the movement mechanism 24 of the present embodiment are configured to be operable and controllable based on the environment of the field F.

Further, the agricultural work device 22 and the movement mechanism 24 of the present embodiment are configured to be operable based on the state of the crop C.

### [Others]

It should be understood that the embodiments disclosed herein are illustrative in all respects and are not restrictive.

For example, in the above embodiment, the case where the rail unit 7 is provided on the support structure 6 that supports the solar power generation panels 2 has been exemplified, but the beam frame 6b and the support frame 6c of the support structure 6, which are parts of the support structure 6, may have a function of a rail for the work units 10.

In this case, the agricultural work device 22 (the work units 10) can be installed without separately installing a dedicated rail other than the support structure 6.

In the above embodiment, the case where the arm 30 of the agricultural work device 22 is an articulated manipulator has been exemplified. However, the arm 30 only needs to be capable of executing agricultural work, and may be an extendable shaft-shaped arm.

In addition, in the above embodiment, the case where the crop C (fruit K) cultivated in the field F is grapes has been exemplified, but the present invention is not limited thereto, and other fruit trees, vegetables, and the like may be cultivated as the crop C.

Further, in the present embodiment, the case where the elevation angle variable mechanism 20 is used as the adjustment mechanism for adjusting the solar radiation amount of the field F has been exemplified. However, the adjustment mechanism only needs to be a mechanism capable of adjusting the solar radiation amount of the field F. For example, the solar power generation panel 2 may be formed of a transparent panel, and a film having a light control function may be used as the adjustment mechanism. In this case, a light control film is used by being superimposed on the transparent solar power generation panel 2. Accordingly, the field F is irradiated with sunlight appropriately adjusted by passing through the solar power generation panel 2 and the light control film.

The scope of the present invention is indicated not by the above meaning but by the claims, and is intended to include meanings equivalent to the claims and all modifications within the scope.

### REFERENCE SIGNS LIST

- 1: agricultural work system
- 2: solar power generation panel
- 2a: cell
- 2b: panel frame
- 4: control device
- 4a: processing unit
- 4b: storage unit
- 6: support structure
- 6a: pillar
- 6b: beam frame
- 6c: support frame
- 7: rail unit
- 8: rail
- 8a: first rail
- 8a1: end portion
- 8a2: slit
- 8b: second rail
- 8b1: opening
- 8c: relief portion
- 8d: inner surface
- 8k: internal space
- 8r: bottom plate
- 8r1: bottom plate
- 8r2: bottom plate
- 8s: slit
- 8s1: slit
- 8s2: slit
- 8s3: connecting slit
- 10: work unit
- 14: environment detection unit
- 16: camera
- 18: wireless communication device (access point)
- 20: elevation angle variable mechanism (adjustment mechanism)
- 20a: base
- 20b: support portion
- 20c: actuator
- 22: agricultural work device
- 24: movement mechanism
- 26: control box
- 30: arm
- 30a: joint
- 31: coupling shaft
- 32: end effector
- 32a, 32b, 32c, 32d: end effector
- 33: sensor
- 34: water spray nozzle
- 40: main body
- 42: wheel
- 44: motor
- 46: control device
- 46a: processing unit
- 46b: storage unit
- 48: storage battery
- 50: wireless communication device
- 100: solar power generation mechanism
- C: crop
- F: field
- K: fruit
- P1: position
- P2: position
- P3: position

## Claims

1. An agricultural work system comprising:
a solar power generation mechanism including a solar power generation panel disposed above a field;
a rail provided between the solar power generation panel and ground;
an agricultural work device; and
a movement mechanism that moves the agricultural work device along the rail.

2. The agricultural work system according to claim 1, wherein
the agricultural work device includes:
an arm having an upper end fixed to the movement mechanism; and
an end effector detachably provided at a lower end of the arm.

3. The agricultural work system according to claim 2, wherein
the solar power generation mechanism further includes an adjustment mechanism that adjusts a solar radiation amount of the field.

4. The agricultural work system according to claim 3, wherein
the adjustment mechanism includes an elevation angle variable mechanism that supports the solar power generation panel such that an elevation angle of the solar power generation panel is changeable.

5. The agricultural work system according to claim 4, further comprising:
an environment detection unit that detects an environment of the field, wherein
the elevation angle variable mechanism is configured to be capable of controlling the elevation angle based on the environment of the field.

6. The agricultural work system according to claim 4, further comprising:
a state detection unit that detects a state of a crop in the field, wherein
the elevation angle variable mechanism is configured to be capable of controlling the elevation angle based on the state of the crop.

7. The agricultural work system according to claim 4, wherein
the end effector includes a state detection unit that detects a state of a crop in the field, and
the elevation angle variable mechanism is capable of adjusting the elevation angle based on a state of the crop.

8. The agricultural work system according to claim 5, wherein
the arm includes a manipulator capable of changing a position of the end effector within a predetermined range around the movement mechanism, and
the movement mechanism and the manipulator are configured to be operationally controllable based on an environment of the field.

9. The agricultural work system according to claim 6, wherein
the arm includes a manipulator capable of changing a position of the end effector within a predetermined range around the movement mechanism, and
the movement mechanism and the manipulator are configured to be operationally controllable based on a state of the crop.

10. The agricultural work system according to claim 2, further comprising:
an environment detection unit that detects an environment of the field, wherein
the arm includes a manipulator capable of changing a position of the end effector within a predetermined range around the movement mechanism, and
the movement mechanism and the manipulator are configured to be operationally controllable based on an environment of the field.

11. The agricultural work system according to claim 2, further comprising:
a state detection unit that detects a state of a crop in the field, wherein
the arm includes a manipulator capable of changing a position of the end effector within a predetermined range around the movement mechanism, and
the movement mechanism and the manipulator are configured to be operationally controllable based on a state of the crop.

12. The agricultural work system according to claim 2, wherein
the work executable by the end effector includes any of harvesting a crop in the field, pruning the crop, water spraying, fertilization of the crop, agrochemical spraying, detecting a state of the crop, imaging the crop, pest control, and charging of equipment in the field.

13. The agricultural work system according to claim 2, further comprising:
another agricultural work device; and
another movement mechanism that moves the another agricultural work device along the rail, wherein
the another agricultural work device includes another end effector capable of executing an agricultural work different from the agricultural work executable by the end effector.

14. The agricultural work system according to any one of claims 1 to 13, further comprising:
a power supply device that supplies power generated by the solar power generation panel to the agricultural work device or the movement mechanism.

15. The agricultural work system according to any one of claims 1 to 14, further comprising:
a position detection mechanism that detects a position of the agricultural work device.

16. The agricultural work system according to any one of claims 6, 7, and 11, wherein
the state detection unit includes at least one of a sugar content sensor, an acidity sensor, or an imaging device.

17. The agricultural work system according to any one of claims 1 to 16, wherein
the rail is a part of a support structure that supports the solar power generation panel.

18. The agricultural work system according to any one of claims 1 to 16, further comprising:
a support structure that supports the solar power generation panel, wherein
the rail is supported by the support structure.
